# EUROPÄISCHE PATENTSCHRIFT

(11) **EP 3 458 757 B1**
(45) Veröffentlichungstag und Bekanntmachung des Hinweises auf die Patenterteilung: **23.09.2020**
(21) Anmeldenummer: 17743028.7
(22) Anmeldetag: 24.07.2017
(51) Int. Cl.: F16L 5/02, F16L 21/00, F16L 25/14

(54) **MUFFENADAPTER MIT HÖHENANPASSUNG**
COUPLING ADAPTER WITH HEIGHT ADJUSTMENT
ADAPTATEUR À MANCHON À RÉGLAGE EN HAUTEUR

(30) Priorität: 27.07.2016 DE 202016104133 U; 02.12.2016 DE 202016106736 U; 27.02.2017 DE 202017101087 U
(43) Veröffentlichungstag der Anmeldung: 27.03.2019
(73) Patentinhaber: Funke Kunststoffe GmbH, 59071 Hamm-Uentrop (DE)
(72) Erfinder: FUNKE, Norbert, 48324 Sendenhorst (DE); FUNKE, Hans-Günter, 48324 Sendenhorst (DE)
(74) Vertreter: Habbel, Ludwig
(86) Internationale Anmeldenummer: PCT/EP2017/068696
(87) Internationale Veröffentlichungsnummer: WO 2018/019795

(56) Entgegenhaltungen:
- DE-A1- 2 317 752
- DE-U1-202015 102 252
- US-A- 2 226 067
- US-A- 2 493 556

## Beschreibung

Die Erfindung betrifft einen Muffenadapter nach dem Oberbegriff des Anspruchs 1.

Aus der DE 20 2015 102 252 U1 ist ein gattungsgemäßer Muffenadapter bekannt, der um einen Rohrabschnitt verteilt angeordnete Kniehebel als Dehnelemente aufweist, um eine Dichtung radial nach außen zu spreizen. Unterschiedliche Spreizstellungen der Kniehebel entlang dem Umfang des Rohrabschnitts ermöglichen eine außermittige Anordnung des Rohrabschnitts innerhalb einer Muffe, um beispielsweise einen sohlengleichen Anschluss des Rohrabschnitts an ein die Muffe aufweisendes Rohr zu ermöglichen.

Auch aus der DE 23 17 752 A1 oder der US 2 226 067 A ist jeweils ein Muffenadapter mit Dehnelementen bekannt, wobei die Dehnelemente als Keile ausgestaltet sind, die in axialer Richtung des Rohrabschnitt verschiebbar sind.

Der Erfindung liegt die Aufgabe zugrunde, einen gattungsgemäßen Muffenadapter dahingehend zu verbessern, dass bei diesem das Sohlenniveau des Muffenadapters optimal an das Sohlenniveau einer angrenzenden Rohrleitung anpassbar ist und hierzu ein unteres, als Hubelement bezeichnetes Dehnelement leicht zu betätigen ist.

Diese Aufgabe wird durch einen Muffenadapter nach Anspruch 1 gelöst. Vorteilhafte Ausgestaltungen sind in den Unteransprüchen beschrieben.

Die Erfindung schlägt mit anderen Worten einen Muffenadapter vor, in dessen unterem Umfangsabschnitt ein Dehnelement separat betätigt werden kann, so dass mittels dieses Dehnelements das Sohlenniveau des Muffenadapters präzise eingestellt werden kann und beispielsweise der Muffenadapter niveaugleich an die Sohle des benachbarten Rohrabschnitts anschließen kann. Aus diesem Grund wird dieses separat betätigbare Dehnelement als Hubelement bezeichnet.

In an sich bekannter Weise ist das Hubelement als Kniehebel ausgestaltet, der mit einem ersten Hebelarm vom Rohrabschnitt beabstandet verläuft, und der mit einem zweiten Hebelarm dem Rohrabschnitt zunächst anliegt. Wenn der erste Hebelarm betätigt wird, so dass er dem Rohrabschnitt näher benachbart wird, wird folglich der zweite Hebelarm vom Rohrabschnitt entfernt. Da sich der zweite Hebelarm radial innerhalb von der Dichtung befindet, wird somit die Dichtung gedehnt und deren wirksamer äußerer Durchmesser vergrößert. Zwischen diesen beiden Hebelarmen ist der Kniehebel kippbeweglich gelagert.

Vorschlagsgemäß wird das Hubelement mittels einer Spannschelle betätigt. Die Spannschelle verläuft um den Rohrabschnitt herum und weist ein Spannschloss auf, welches in der oberen Umfangshälfte des Rohrabschnitts angeordnet ist, so dass das Spannschloss bequem zugänglich ist und dementsprechend problemlos betätigt werden kann.

Weiterhin ist vorschlagsgemäß das Hubelement anders ausgestaltet als die übrigen Kniehebel, nämlich mit einem ersten Hebelarm, der länger als bei den übrigen Kniehebeln ausgestaltet ist. Auf diese Weise kann die Spannschelle zur Betätigung des Hubelements außerhalb der übrigen Kniehebel verlaufen und deren Betätigung nicht beeinträchtigen.

Vorteilhaft kann bei sämtlichen Varianten des Muffenadapters stets vorgesehen sein, dass der Rohrabschnitt des Muffenadapters eine Länge von höchstens 50 cm aufweist. Der Muffenadapter dient ja nicht zur Überbrückung größerer Strecken, sondern lediglich zum Durchmesserausgleich zwischen zwei unterschiedlichen Rohrleitungsabschnitten. Ein dementsprechend kurz ausgestalteter Muffenadapter weist ein dementsprechend geringes Gewicht auf, was die Handhabung des Muffenadapters erleichtert.

Eine zuverlässige Abdichtung zwischen den beiden Rohren auch bei der Überbrückung sehr großer Durchmesserunterschiede kann vorteilhaft dadurch ermöglicht werden, dass die mehreren nach außen beweglichen Elemente dort verzahnt sind, wo sie die radial außen um die Elemente verlaufende Dichtung stützen. Die Verzahnung stellt sicher, dass die Dichtung über ihren gesamten Umfang möglichst gleichmäßig unterstützt wird. So werden Undichtigkeiten vermieden, die ansonsten möglicherweise nicht ausgeschlossen werden können, wenn zwischen zwei benachbarten Elementen die Dichtung nicht ausreichend von innen nach außen gedehnt und an eines der beiden zu verbindenden Rohre angedrückt wird. Ein entsprechend großer Spalt zwischen zwei Elementen könnte diese Undichtigkeit begründen. Die vorschlagsgemäße Verzahnung der benachbarten Elemente überbrückt einen solchen Spalt.

Ein Ausführungsbeispiel der Erfindung wird anhand der rein schematischen Darstellungen nachfolgend näher erläutert. Dabei zeigt
- Fig. 1: einen Längsschnitt durch ein Ausführungsbeispiel eines Muffenadapters, und
- Fig. 2: eine perspektivische Ansicht auf einen Abschnitt eines Dehnelements.

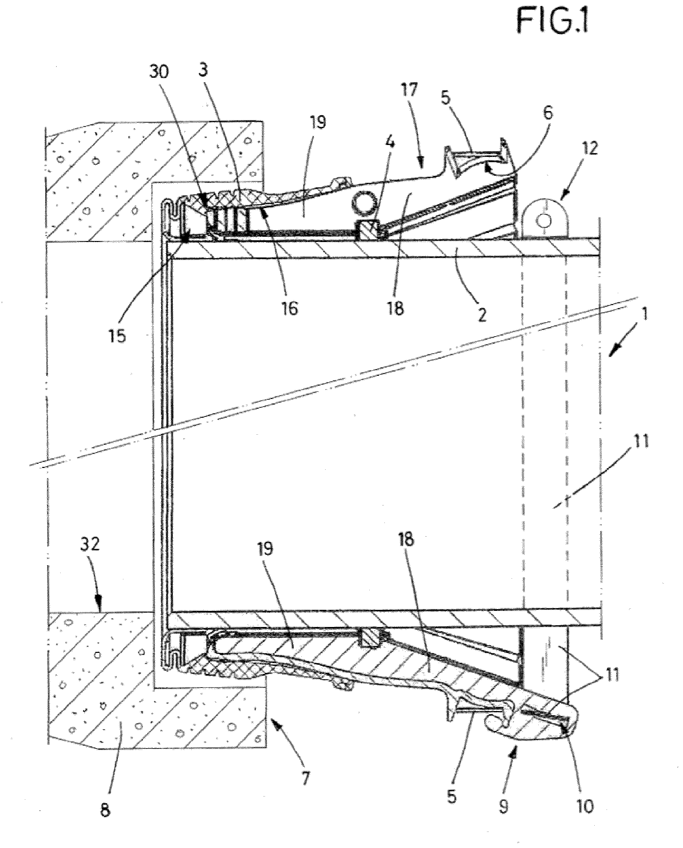

In Fig. 1 ist mit 1 insgesamt ein Muffenadapter bezeichnet, der einen Rohrabschnitt 2 aufweist, wobei der Rohrabschnitt 2 lediglich über einen Teil seiner Gesamtlänge dargestellt ist. Die Gesamtlänge beträgt beispielsweise maximal 40 cm.

An einem axialen Ende des Rohrabschnitts 2 ist eine Dichtung 3 aus einem Elastomerwerkstoff angeordnet, die mit einem ersten Abschnitt 15 außen dicht an dem Rohrabschnitt 2 anliegt, und die einen zweiten Abschnitt 16 aufweist, der vom Rohrabschnitt 2 beabstandet verläuft.

Dehnelemente in Form von Kniehebeln 17 sind rings um den Rohrabschnitt 2 verteilt angeordnet. Sie weisen jeweils einen ersten Hebelarm 18 auf, der vom Rohrabschnitt 2 entfernt, nämlich schräg, verläuft sowie einen zweiten Hebelarm 19, der dem Rohrabschnitt 2 anliegt und sich unter den zweiten Abschnitt 16 der Dichtung 3 erstreckt. Im mittleren Bereich zwischen den beiden Hebelarmen 18 und 19 sind die Kniehebel 17 auf einem um den Rohrabschnitt 2 umlaufenden Lagerring 4 kippbeweglich gelagert.

Ein Spannband 5 läuft in einer Spannnut 6 am Ende des ersten Hebelarms 18 der Kniehebel 17, so dass mit Hilfe dieses Spannbandes 5 sämtliche Dehnelemente, nämlich sämtliche Kniehebel 17 gleichmäßig gespannt werden können, um mit ihren jeweiligen zweiten Hebelarmen 19 die umlaufende Dichtung 3 zu dehnen und dicht von innen an eine Muffe 7 einer Rohrleitung, beispielsweise eines Betonrohrs 8, anzulegen. Das Betonrohr 8 weist in seinem Inneren als tiefsten Punkt die so genannte Rohrsohle 32 auf, und der Muffenadapter 1 soll mit seiner Rohrsohle niveaugleich an die Rohrsohle 32 anschließen.

Hierzu werden sämtliche Dehnelemente, also sämtliche Kniehebel 17, zunächst leicht vorgespannt. Anschließend wird der unterste Kniehebel, der als Hubelement 9 ausgestaltet ist, separat von den anderen Kniehebeln 17 betätigt, um den Rohrabschnitt 2 so weit anzuheben, dass dessen Sohle exakt auf das Sohlenniveau der Rohrsohle 32 eingestellt ist. Hierzu ist das Hubelement 9 als Sonder-Kniehebel ausgestaltet, dessen erster Hebelarm 18 verlängert ist und über die Spannnut 6 hinausragt, um dort eine Durchgangsöffnung 10 zu schaffen, durch welche sich eine Spannschelle 11 erstreckt. Die Spannschelle 11 verläuft um den Rohrabschnitt 2 herum und weist in der oberen Umfangshälfte des Rohrabschnitts 2, bei dem dargestellten Ausführungsbeispiel oberhalb des Scheitelpunkts des Rohrabschnitts 2, ein Spannschloss 12 auf. Bei Betätigung des Spannschlosses 12 wird in an sich bekannter Weise die wirksame Länge der Spannschelle 11 verkürzt und somit der erste Hebelarm 18 des Hubelements 9 an den Rohrabschnitt 2 herangezogen, so dass durch die dementsprechende Dehnung der Dichtung 3 am untersten Umfangspunkt des Muffenadapters 1 der Rohrabschnitt 2 des Muffenadapters 1 gegenüber dem Betonrohr 8 angehoben wird und die Sohlenniveaus des Betonrohrs 8 und des Muffenadapters 1 angeglichen werden können.

Die Vorgehensweise bei Montage des Muffenadapters 1 ist wie folgt: Zunächst werden sämtliche Kniehebel 17 gemeinsam betätigt, so dass die Dichtung 3 gedehnt wird und mit einer sehr geringen Anlage- bzw. Vorspannkraft, der Muffe 7 des Betonrohrs 8 anliegt. Anschließend wird das Hubelement 9 separat betätigt und das Sohlenniveau des Muffenadapters 1 wie gewünscht eingestellt. Anschließend werden sämtliche Kniehebel 17 wiederum gemeinsam betätigt, um den Muffenadapter 1 sicher innerhalb der Muffe 7 zu fixieren.

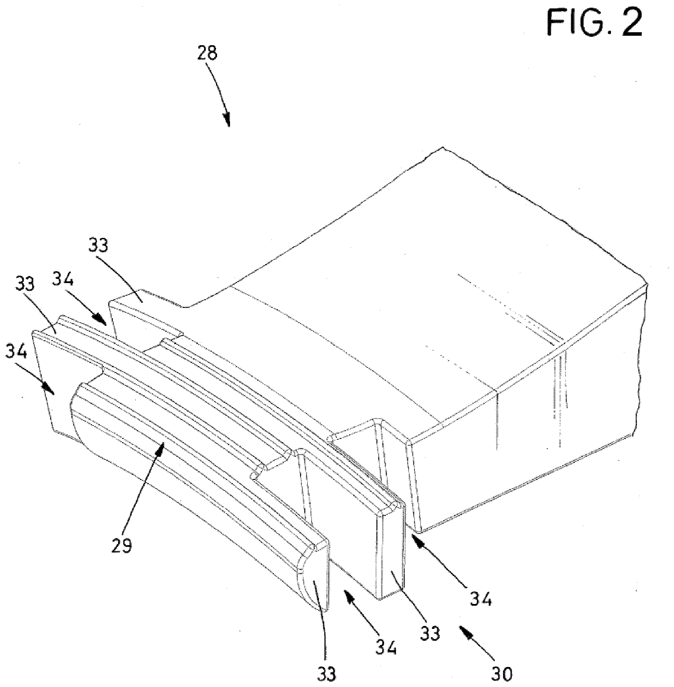

In Fig. 2 ist ein Ausführungsbeispiel eines Dehnelements dargestellt, wobei in diesem Ausführungsbeispiel das Dehnelement mit 28 gekennzeichnet ist. An dem Ende, mit welchem die Dehnelemente 28 innerhalb des zweiten Abschnitts 16 der Dichtung 3 angeordnet sind, sind sie mit einer Profilierung 29 auf ihrer radial äußeren Oberfläche versehen. Diese Profilierung 29 dient dazu, die außen um die Dehnelemente 28 umlaufend angeordnete Dichtung 3 verschiebesicher zu halten.

In dem Bereich, mit welchem sich die Dehnelemente 28 radial innerhalb des Abschnitts 16 der Dichtung befinden, ist jedes Dehnelement 28, in Umfangsrichtung um den Rohrabschnitt 2 gesehen, beidseitig mit einer Verzahnung 30 versehen. Die Verzahnungen 30 auf den beiden gegenüberliegenden Seiten des Dehnelements 28 sind insofern komplementär zueinander ausgestaltet, als Vorsprüngen 33 auf der einen Seite des Dehnelements 28 Vertiefungen 34 auf der anderen Seite desselben Dehnelements 28 gegenüber liegen. Die Vorsprünge 33 eines Dehnelements 28 können daher in Vertiefungen 34 eines benachbarten, gleichartigen Dehnelements 28 eintauchen.

Wie aus Fig. 1 ersichtlich ist, können auch die zweiten Hebelarme 19 der Kniehebel 17 mit derartigen Vorsprüngen 33 und Vertiefungen 34 versehen sein, so dass benachbarte Kniehebel 17 in dem Bereich miteinander verzahnt sind, mit welchem sie sich unter den Abschnitt 16 der Dichtung 3 erstrecken.

Wenn die Dehnelemente 28 bzw. die zweiten Abschnitte 16 der Kniehebel 17 radial nach außen bewegt werden, ergeben sich mit zunehmender Spreizbewegung zunehmend größere Spaltweiten zwischen benachbarten Dehnelementen 28 bzw. zwischen zwei benachbarten zweiten Abschnitten 16 der Kniehebel 17. Im Bereich der Verzahnungen 30 jedoch wird über den gesamten Umfang des Muffenadapters 1 hinweg eine kontinuierliche Unterstützung des Abschnitts 16 der Dichtung 3 ermöglicht, so dass die Dichtung 3 über ihren gesamten äußeren Umfang hinweg gleichmäßig an den betreffenden Rohrabschnitt angepresst wird, in welchem sich der Muffenadapter 1 befindet.

### Bezugszeichenliste

- 1: Muffenadapter
- 2: Rohrabschnitt
- 3: Dichtung
- 4: Lagerring
- 5: Spannband
- 6: Spannnut
- 7: Muffe
- 8: Betonrohr
- 9: Hubelement
- 10: Durchgangsöffnung
- 11: Spannschelle
- 12: Spannschloss
- 14:
- 15: Erster Abschnitt
- 16: Zweiter Abschnitt
- 17: Kniehebel
- 18: Erster Hebelarm
- 19: Zweiter Hebelarm
- 20:
- 21:
- 22:
- 23:
- 24:
- 25:
- 26:
- 27:
- 28: Dehnelement
- 29: Profilierung
- 30: Verzahnung
- 31:
- 32: Rohrsohle
- 33: Vorsprung
- 34: Vertiefung

## Patentansprüche

1. Muffenadapter (1),
• mit einem zylindrischen Rohrabschnitt (2),
• einer den Rohrabschnitt (2) zirkumferent außen umgebenden Dichtung (3) aus einem elastisch verformbaren Werkstoff,
wobei die Dichtung (3) einen ersten Abschnitt (15) aufweist, mit welchem sie dicht an den Rohrabschnitt (2) anschließt,
sowie einen zweiten Abschnitt (16), der gegenüber dem Rohrabschnitt (2) radial nach außen beweglich ist,
• und mit mehreren Dehnelementen,
welche zwischen dem Rohrabschnitt (2) und dem zweiten Abschnitt (16) der Dichtung (3) um den Umfang des Rohrabschnitts (2) verteilt angeordnet sind,
und radial nach außen beweglich sind, derart, dass der Außendurchmesser der Dichtung (3) in Abhängigkeit von der jeweiligen Stellung der Dehnelemente veränderlich ist,
wobei im unteren Umfangsabschnitt des Muffenadapters (1) ein als Hubelement (9) bezeichnetes Dehnelement angeordnet ist,
welches separat betätigbar ist, derart, dass mittels des Hubelements (9) die Sohlenhöhe des Muffenadapters (1) einstellbar ist,
und welches als Kniehebel (17) ausgestaltet ist,
der einen ersten Hebelarm (18) aufweist, der von einer vom Rohrabschnitt (2) radial weiter entfernten Ruhestellung in eine dem Rohrabschnitt (2) radial nähere Spannstellung beweglich ist,
sowie einen zweiten Hebelarm (19) aufweist, der dem zweiten Abschnitt (16) der Dichtung (3) radial von innen anliegt, und der von einer dem Rohrabschnitt (2) näheren Ruhestellung in eine vom Rohrabschnitt (2) radial weiter entfernte Dehnstellung beweglich ist, in welcher die Dichtung (3) einen vergleichsweise größeren Außendurchmesser aufweist,
wobei der Kniehebel (17) in seinem mittleren Bereich zwischen den beiden Hebelarmen (18, 19) kippbeweglich gelagert ist, und das Hubelement (9) mittels einer Spannschelle (11) betätigbar ist, die um den Rohrabschnitt (2) herum verläuft,
wobei ein Spannschloss (12) der Spannschelle (11) in der oberen Umfangshälfte des Rohrabschnitts (2) angeordnet ist,
**dadurch gekennzeichnet,**
**dass** das Hubelement (9) einen ersten Hebelarm (18) aufweist, welcher länger ausgestaltet ist als die ersten Hebelarme (18) der übrigen, ebenfalls als Kniehebel (17) ausgestalteten Dehnelemente.

2. Muffenadapter nach Anspruch 1,
**dadurch gekennzeichnet,**
**dass** der Rohrabschnitt (2) eine Länge von höchstens 50 cm aufweist.

3. Muffenadapter nach einem der vorhergehenden Ansprüche,
**dadurch gekennzeichnet,**
**dass** Dehnelemente (28) dort, wo sie die Dichtung (3) stützen, jeweils seitlich mit den beiden benachbarten Dehnelementen (28) verzahnt sind.

## Claims

1. Sleeve adapter (1),
• comprising a cylindrical tubing section (2),
• a seal (3) that is made from an elastically deformable material and encloses the tubing section (2) circumferentially on the outside, where the seal (3) incorporates a first section (15) by which it sits tightly against the tubing section (2) as well as a second section (16) which can be moved radially outwards relative to the tubing section (2),
• and comprising a number of expanding elements that are arranged between the tubing section (2) and the second section (16) of the seal (3) around the circumference of the tubing section (2), and which can be moved radially outwards,
in such a way that the outside diameter of the seal (3) can be changed according to whichever position the expanding elements are in,
where an expanding element that is referred to as a lifting element (9)
and that can be actuated separately in such a way that the level of the underpart of the sleeve adapter (1) can be adjusted by means of the lifting element (9) is disposed in the lower circumferential section of the sleeve adapter (1),
and which is designed as a toggle lever (17) which incorporates a first lever arm (18) that can be moved from a rest position that is set radially further away from the tubing section (2) into a clamping position that is radially closer to the tubing section (2),
and incorporates a second lever arm (19) that sits against the second section (16) of the seal (3) radially from inside and that can be moved from a rest position that is closer to the tubing section (2) into an expanding position that is radially further away from the tubing section (2) and in which the seal (3) has a comparatively larger outside diameter
where the toggle lever (17) is tiltably mounted at its midpoint between the two lever arms (18, 19) and the lifting element (9) can be actuated by means of a clamp (11) fitted around the tubing section (2),
where a tension screw (12) on the clamp (11) is disposed in the upper circumferential half of the tubing section (2),
**characterised in that** the lifting element (9) incorporates a first lever arm (18) that is constructed longer than the first lever arms (18) of the other expanding elements that are likewise constructed as toggle levers (17).

2. Sleeve adapter in accordance with claim 1,
**characterised in that** the tubing section (2) has a maximum length of 50 cm.

3. Sleeve adapter in accordance with any one of the foregoing claims,
**characterised in that** expanding elements (28) are made to interlock at the side with the two adjoining expanding elements (28) at the point where the expanding elements (28) support the seal (3).

## Revendications

1. Adaptateur à manchon (1),
• comprenant un segment de tuyau cylindrique (2),
• un joint (3) en matériau élastiquement déformable entourant la circonférence extérieure du segment de tuyau (2), sachant que le joint (3) présente un premier segment (15) par lequel il applique de manière étanche contre le segment de tuyau (2), ainsi qu'un deuxième segment (16) déplaçable radialement vers l'extérieur par rapport au segment de tuyau (2),
• et comprenant plusieurs éléments de dilatation disposés entre le segment de tuyau (2) et le deuxième segment (16) du joint (3) autour de la circonférence du segment de tuyau (2), et déplaçables radialement vers l'extérieur,
de façon que le diamètre extérieur du joint (3) soit variable en fonction de la position ponctuelle des éléments de dilatation,
sachant que dans le segment inférieur de la circonférence de l'adaptateur à manchon (1) est disposé un élément de dilatation appelé élément de levage (9),
lequel est actionnable séparément de sorte que la hauteur de semelle de l'adaptateur à manchon (1) est réglable au moyen de l'élément de levage (9),
et qui est configuré en genouillère (17), qui présente un premier bras de levier (18) déplaçable d'une position de repos plus éloignée radialement du segment de tuyau (2) vers une position de serrage radialement plus proche du segment de tuyau (2),
ainsi qu'un deuxième bras de levier (19) qui applique radialement de l'intérieur contre le deuxième segment (16) du joint (3) et qui est déplaçable d'une position de repos plus proche du segment de tuyau (2) vers une position de dilatation radialement plus distante du segment de tuyau (2), position dans laquelle le joint (3) présente un diamètre extérieur comparativement plus important,
sachant que la genouillère (17) est en appui mobile basculant dans sa zone médiane située entre les deux bras de levier (18, 19), et que l'élément de levage (9) est actionnable via un collier de serrage (11) dont le tracé encercle le segment de tuyau (2),
sachant qu'un tendeur (12) du collier (11) est disposé dans la moitié circonférentielle supérieure du segment de tuyau (2),
**caractérisé en ce que** l'élément de levage (9) présente un premier bras de levage (18) configuré plus long que les premiers bras de levier (18) des éléments d'allongement restants également configurés en genouillères (17).

2. Adaptateur à manchon selon la revendication 1,
**caractérisé en ce que** le segment de tuyau (2) a une longueur de 50 cm maximum.

3. Adaptateur à manchon selon l'une des revendications précédentes,
**caractérisé en ce que** des éléments de dilation (28), là où ils soutiennent le joint (3), engrènent respectivement latéralement par leur denture dans les deux éléments de dilatation (28) voisins.
